# EUROPEAN PATENT APPLICATION

(11) **EP 2 130 790 A1**
(43) Date of publication of application: **09.12.2009**
(21) Application number: 09159092.7
(22) Date of filing: 29.04.2009
(51) Int. Cl.: B65G 29/00, B65G 47/90, B23Q 7/04, B25J 15/00, B23P 21/00

(54) **Central transfer unit having a plurality of independently actuated gripper arms**

(30) Priority: 03.06.2008 IT BS20080114
(71) Applicant: Guitti Macchine S.a.S. di Guitti Elisa & C., 25135 S. Eufemia, Brescia (IT)
(72) Inventor: Pucci Delle Stelle, Simone, 25126 Brescia (IT); Guitti, Elisa, 25135 Brescia (IT)
(74) Representative: Chimini, Francesco

(57) **Abstract**

The invention relates to a central transfer unit (1) for moving pieces between a number of workstations, comprising a motor system (10), a central support (12) operatively connected to the motor system so as to be placed in rotation around its axis, and a number of gripper arms (14) which extend from said central support, each arm being fitted with a gripper (16) of at least one piece. The gripper arms can be moved in relation to the support from an inactive rearward position to an advanced pick-up/put-down position of the piece from or at a workstation. The gripper arms can be moved between said two rearward and advanced positions independently of the rotation of the central support. Specifically, each arm is controlled by a respective pneumatic cylinder.

## Description

The present invention relates to a central transfer unit for moving pieces between various workstations, for example in a transfer machine.

Central transfer units generally comprise a motor system, a central support operatively connected to the motor system so as to be placed in rotation around its axis, and a number of gripper arms extending from said central support, each gripper arm holding at least one piece. The gripper arms are movable in relation to the support between an inactive rearward position and an advanced position in which they can pick up or put down a piece from or at a work station.

Such central transfer units are based on a cam system which, following rotation of the central support, automatically extends or retracts the gripper arm. The command is hydraulic, with a proportional valve, or electric, with three-phase motor and inverter in an open loop.

Precisely on account of the fact that the extension/retraction movement of the arms is linked to and depends on the angular position of the transfer unit, in the known devices a rest position exists in which the arms are completely retracted and which is generally in an intermediate angular position between two adjacent workstations. For example, in the case of four workstations positioned at 0°, 90°, 180°, 270°, the rest position corresponds to an orientation of the arms at an angle of 45° and its multiples.

When the central unit rotates, either clockwise or anti-clockwise, the cam system generates the extension movement of the gripper arms, which reach their maximum extension in the positions of 0°, 90°, etc.

A mechanical cam and limit switch system indicates the position of the transfer unit at all times, which may be one of the following positions:
- put-down piece position,
- rest position (also known as "Home")
- pick-up piece position.

The functioning cycle of the central unit according to the known art therefore comprises the following phases:
- rotation of the transfer unit from the rest position (45°) to the pick-up position (0°), with automatic extension of the gripper arms;
- locking of the piece;
- raising of the transfer unit;
- rotation of the transfer unit from the pick-up position (0°) to the put-down position (90°), with automatic retraction of the gripper arm as far as the rest position (45°) and subsequent extension towards the put-down position;
- lowering of the transfer unit;
- unlocking of the piece;
- rotation of the transfer unit from the put-down position (90°) to the rest position (45°), with automatic retraction of the arms.

It is thereby evident that a considerable part of the functioning cycle of the transfer unit is consequently wasted in putting the unit into the rest position, so as to enable the retraction of the arms.

Only when the unit is in this intermediate position can the pieces start to be processed by the workstations.

In addition, the limited flexibility of such machine, which merely transfers the pieces from one station to the next station, and above all with the workstations at a standstill, is similarly evident.

The purpose of the present invention is to contrive and make available a central transfer unit which makes it possible to overcome the drawbacks complained of above with reference to the state of the art.

Specifically, the objective of the present invention is to make available a transfer unit which significantly reduces the cycle time and increases the flexibility of application.

Such purpose and such objectives are achieved by a transfer unit according to claim 1.

Further characteristics and advantages of the transfer unit according to the invention will be evident from the description below made by way of preferred and non-limiting embodiments, with reference to the attached drawings, wherein:

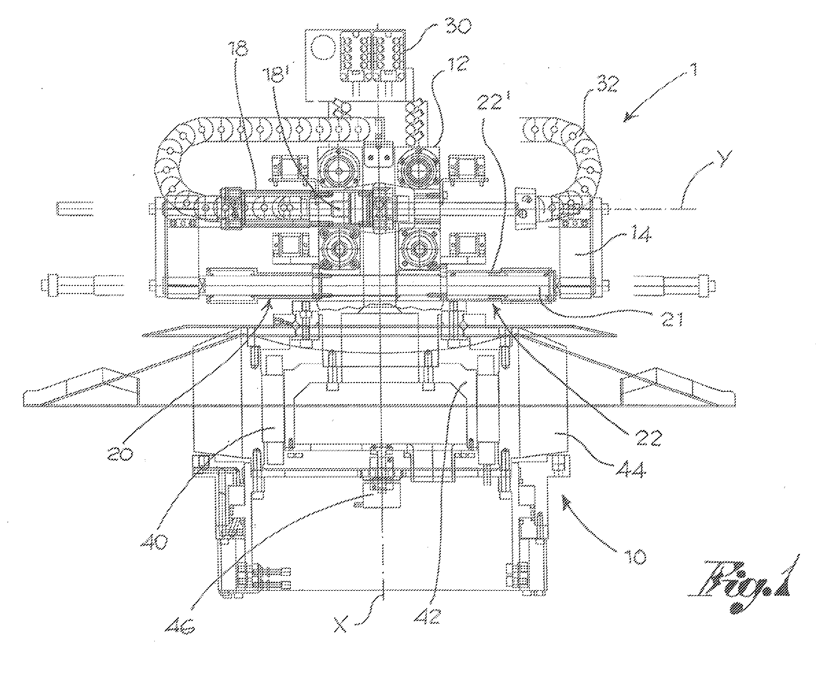

- figure 1 shows an elevation view of a transfer unit according to the invention;
- figure 2 shows a perspective view of the transfer unit;
- figures 3a-3e show a schematic representation of the same number of phases of a functioning cycle of the transfer unit; and
- figure 4 shows a schematic representation of a transfer unit according to the invention in one embodiment variation.

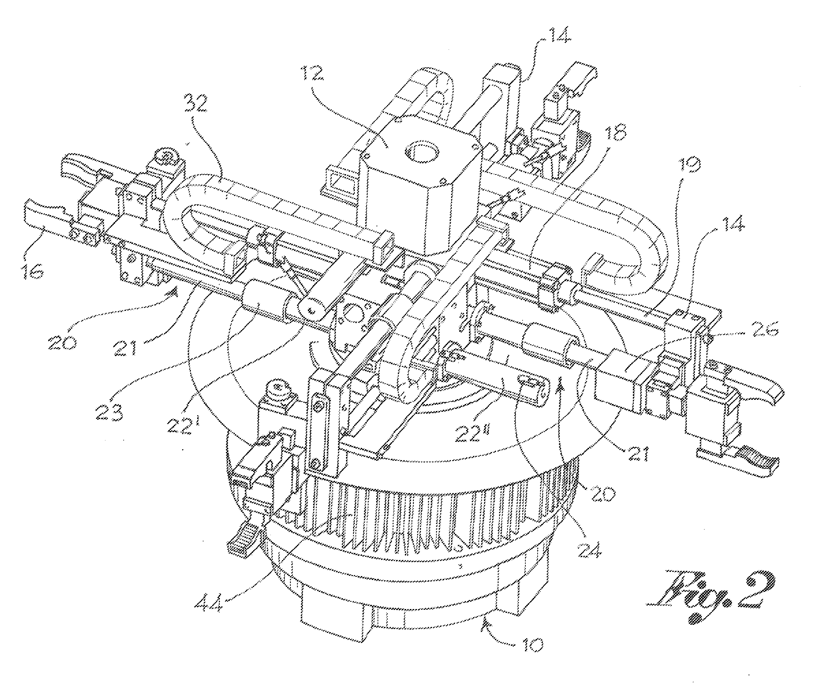

With reference to the aforesaid figures, reference numeral 1 globally denotes a central transfer unit for moving pieces between a number of workstations. The central transfer unit 1 according to the invention can be typically used in a transfer machine. According to one general embodiment, the transfer unit 1 comprises a motor system 10, a central support 12 operatively connected to the motor system 10 so as to be placed in rotation around its axis X, for example a vertical axis, and a number of gripper arms 14 which extend from said central support 12. Each arm 14 is fitted with a gripper 16 holding at least one piece (figure 2).

The gripper arms 14 are movable in relation to the central support 12 at least between an inactive rearward position and an advanced pick-up/put-down position of the piece from or at a workstation. In a typical embodiment, the arms 14 can move along respective main axes Y orthogonal to the X-axis of the central support.

In practice, the gripper arms 14 make two movements: a rotation movement in relation to the X axis, being linked to the central support 12, and an axial or radial movement between the advanced and rearward positions. When the arms 14 are in a rearward position, they do not interfere with the workstations of the pieces and/or with the machine frame, and can thus be made to rotate.

In a typical embodiment, the gripper arms 14 are evenly distributed around the central support 12. For example, in the embodiment illustrated, the central transfer unit 1 comprises four gripper arms 14 distanced 90° from each other.

According to the invention, the gripper arms 14 can move between the advanced and rearward positions independently of the rotation of the central support 12.

According to a preferred embodiment, each gripper arm 14 is moved by a respective pneumatic cylinder 18 mounted on the central support 12. Advantageously, each pneumatic cylinder 18 extends transversally, or radially, from the central support 12. The respective gripper arm 14 is attached to the extremity of the stem 19 of the pneumatic cylinder 18.

Advantageously, in order to reduce the transversal or radial encumbrance of the central transfer unit 1, each pneumatic cylinder 18 has a head fitting inside the central support 12. In other words, the piston 18' of the cylinder 18 runs partially inside a seat made in the central support 12.

According to a preferred embodiment, each gripper arm 14 is also connected to an anti-rotation arm 20 which extends from the central support 12 parallel to the pneumatic cylinder 18. In practice, the anti-rotation arm 20 prevents the gripper 16 from rotating undesirably on account of the weight of the piece transported.

In one embodiment, each anti-rotation arm 20 comprises a stem 21 sliding axially in a respective casing 22 attached to the central support 12. The gripper arm 14 is attached to one end of the stem 21.

More specifically, the stem 21 of the anti-rotation arm 20 traverses and runs partially inside the central support 12. The casing 22 comprises therefore a front portion 22', in other words facing the respective gripper arm 14, and a rear portion 22" which extends from the central support 12 in the opposite direction to house the free end of the stem 21.

In the front portion 22' of the casing 22 of the anti-rotation arm is a sleeve 23 housing the guide bearings for the translation of the stem 21.

In one embodiment, the central support 12 is in the shape of a prism of N sides, where N is the number of gripper arms 14. A pneumatic cylinder 18, anti-rotation arm 20 joined to the gripper arm 14, and the rear portion of the anti-rotation arm 20 joined to the opposite gripper arm, extend from each face.

According to a preferred embodiment, the central transfer unit comprises in addition limit switch sensors 24 able to detect the limit positions of the gripper arms 14, that is the position of maximum backward movement and maximum extension. According to one embodiment, such limit switch sensors 24 are induction or proximity sensors, positioned on the rear portion 22" of the casing 22 of the anti-rotation arm 20. In practice, the limit switch sensors 24 gauge the position of the stem 21 of the anti-rotation arms. This way, the presence of the metal stem 21 of the anti-rotation arms 20 is taken advantage of to avoid the use of pneumatic cylinders 18 fitted with magnets.

According to one embodiment, each gripper arm 14 is, in addition, attached to a command device 26 for opening and closing the gripper 16. For example, such control device is a pneumatic cylinder, specifically of the compact type.

A series of solenoid valves 30 is mounted on the central support 12 for the pneumatic powering of the pneumatic cylinders 18 and 26. A system of mobile raceways 32 takes the pneumatic and electric power supply cables from the central support 12 to the pneumatic cylinders and to the electric limit switches.

According to a preferred embodiment, the motor system 10 is a torque or direct drive motor. Torque motors are three-phase, synchronous motors with multipolar permanent excitation and hollow shaft rotors. Compared to traditional, hydraulic and electric actuation devices composed of electric motors and reducers or belts, torque motors guarantee maximum precision and highly dynamic performance, given that they prevent elasticity and play in the drive shaft, while total mass and friction are reduced to a minimum. In addition, such motors last longer given that the transmission elements subject to mechanical wear are eliminated.

With reference to the embodiment illustrated, the motor 10 comprises a stator 40 and a rotor 42 rotating on the stator. Advantageously, the central support 12 is mounted directly onto the rotor 42 of the torque motor 10. A finned annular element 44 helps to cool the motor system 10.

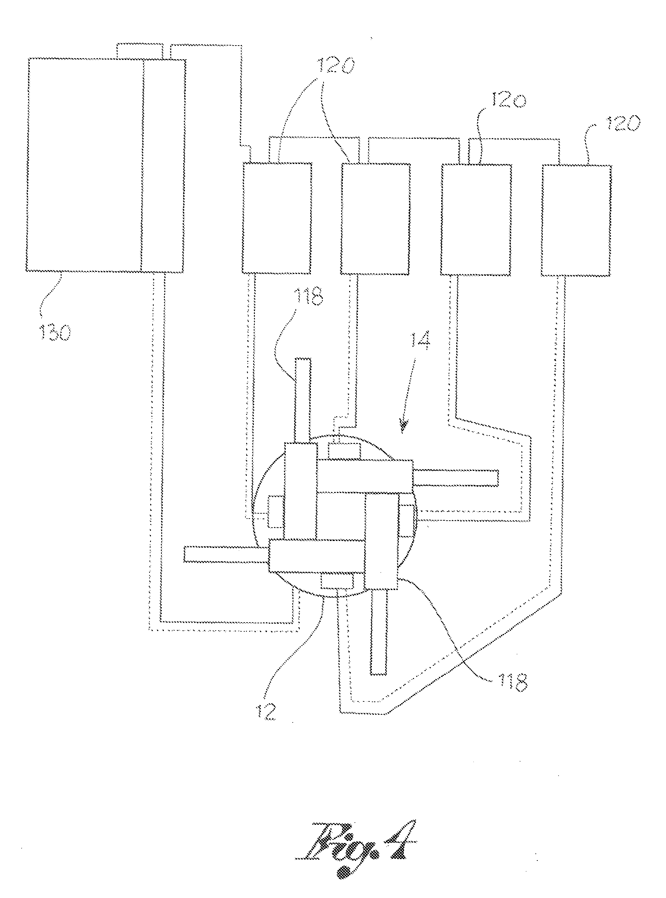

Advantageously, the motor system 10 is controlled by a control unit 130 of the numerical control type shown schematically in the embodiment variation of figure 4. In addition, the transfer unit 1 comprises a detector sensor 46 of the angular position of the motor system 10, for example an absolute angular encoder, connected to the control unit so as to form a closed loop actuation device of the torque motor 10.

Advantageously, the control unit also controls the movement of the gripper arms 14 and of the gripper 16, depending on the position identified by the limit switches, according to a control method described below.

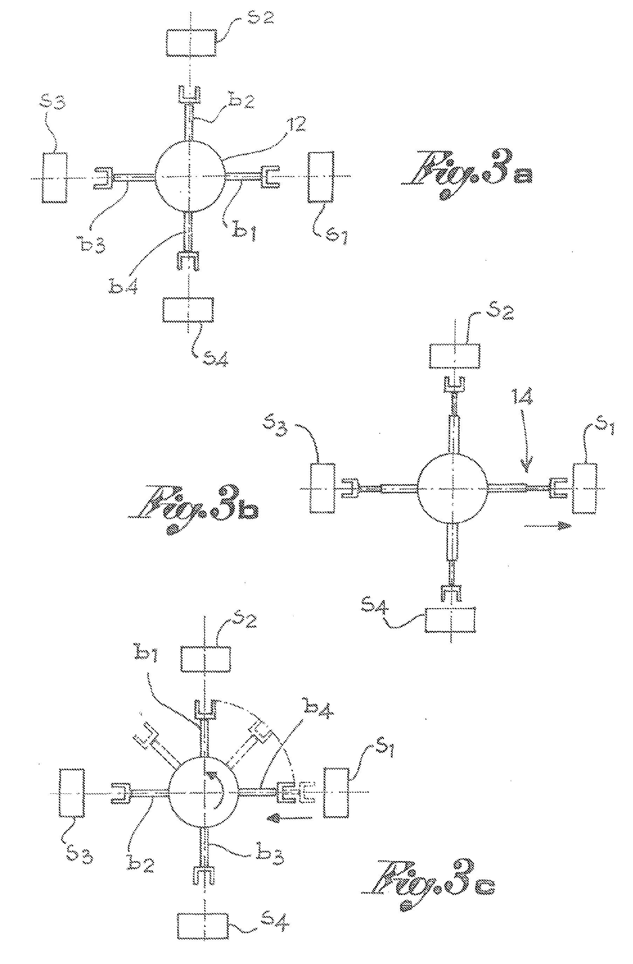

Consider, for example, a transfer machine 50, schematically represented in figures 3a-3e, comprising four workstations S1-S4, positioned around the central transfer unit 1. Assume, for example that the station S1 is the station where the pieces for processing are picked up and the processed pieces put down. The remaining stations S2-S4 are veritable processing stations.

It should first of all be pointed out how the central transfer unit according to the invention allows the workstations to commence processing of the pieces as soon as the gripper arms 14 are recalled to a rearward position, in other words without needing to rotate the central support 12, as happens in the machine according to the known art. In other words, the rotation of the central support 12 happens when processing of the pieces has already commenced, or rather takes place in a "masked" time.

In addition, thanks to the fact that the movement of the gripper arms 14 in a radial direction, is independent of their rotation, the central support 1 can be stopped in a rest position in which the gripper arms are aligned with the workstations, rather than staggered, for example by 45°. In other words, the rest position also coincides with the pick-up position of the pieces from the workstations.

As a result, commencement of a new work phase takes place in a much shorter time than in the known machines, the gripper arm 14 already being in the angular pick-up position.

An example of the control method for operating the central transfer unit comprises the following phases in succession.

Starting from a rest position in which, as hinted above, the gripper arms 14 (indicated in figures 3a-3e as b1-b4) are already aligned with the workstations (figure 3a), the arms are extended and the respective grippers 16 opened to pick up a piece (figure 3b).

The arms 14 are then recalled to a rearward position and rotation of the transfer unit towards the put-down position (figure 3c) commences.

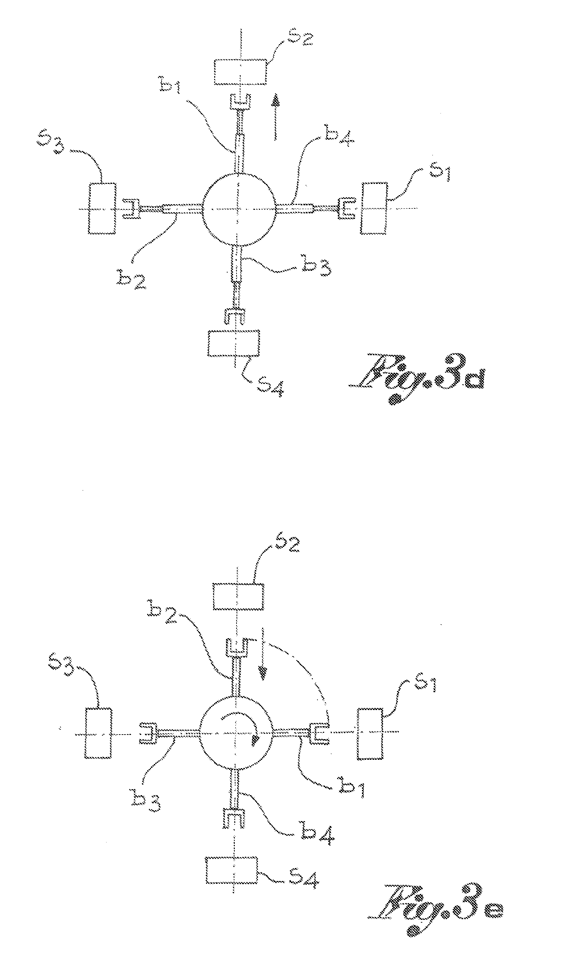

As soon as the gripper arms 14 have reached the put-down position, they are extended and the grippers are opened to put down the pieces (figure 3d).

The arms 14 are then recalled to a rearward position (in the meantime, as soon as the limit switches signal that the rearward position has been reached, the control unit activates the workstations) and the transfer unit is made to rotate towards the pick-up position to commence a new work phase (figure 3e).

In the example illustrated, the angular movement made by the transfer unit is equal to a 90° angle each time, there being four workstations. However, it should be emphasised how, thanks to the fact that the transfer unit allows the gripper arms to be extended or retracted in any angular position of the unit, other functioning possibilities of the transfer machine may also be provided.

For example, a piece may be transferred from one station to two stations further on. Consider again a machine with four stations, in which the fourth station is empty and predisposed for future requirements: the piece picked up in the third station S3 remains in the gripper during transferral of the piece from the first station S1 to station 2, and of the piece from the second station S2 to the third station S3; while the workstations start up, the transfer unit, which has not extended the arm 14 containing the piece picked up from the third station since managed independently, brings the piece to the first station S1, completing a rotation of 180°, and puts it down.

Another example of an application particularly easy to manage thanks to the transfer unit according to the invention is the realisation of two workstations in a single station, for example the station S1. As well as the pick up/put down station there is a measurement station. The possibility of positioning the transfer unit in any angular position and moving the gripper arms in whatever position the unit is in makes it possible to conduct two operations in the same station. If the operations of such workstations together fall within the cycle time of the other workstations, the fourth station, normally used as the measuring station, can be used to perform processing without foregoing measurement of the pieces.

To summarise, while in the transfer units according to the known art after the piece has been put down in a workstation the machine must necessarily rotate the unit to a rest position different from the pick-up position to disengage the grippers from the workstation, with the transfer unit according to the invention after putting down the piece in the workstation the machine merely needs to recall the gripper arms to enable commencement of processing on the piece; the rotation of the transfer unit takes place in a "masked" time.

In addition, in the known devices, during the processing of the pieces in the stations the central transfer unit must necessarily find itself in the rest position to prevent collision of the grippers and the components of the stations; in the subsequent cycle the mechanical hand must first of all put itself into the pick-up position, wasting precious time.

With the transfer unit proposed here, during the processing of the pieces in the stations, the central transfer unit is already in the pick-up position because the extension of the gripper is controlled separately: in the subsequent cycle the mechanical hand is thus already in the pick-up position, without wasting precious time.

As regards the control of the rotation of the transfer unit, it should be emphasised how, in the known devices the non-servo-controlled rotation produced electrically by a three-phase motor controlled by an inverter, or hydraulically by a proportional valve, produces an open loop control system which is difficult to optimise in terms of performance (acceleration) and regulation. To increase performance the only option is to adjust the speed and acceleration ramp controlled in an open loop by the control unit (a PLC), with significant limitations associated with the kinematic chain. The result is an oscillating course during the braking phase and significant mechanical stress during braking and acceleration.

In the unit according to the invention, wherein the rotation is a servo-controlled rotation produced by a torque motor and relative actuation device managed by numerical control which detects the angular position of the transfer by means of an absolute encoder, a closed loop system is achieved which is fully controllable at all times in terms of speed, acceleration and jerk. To increase performance a number of regulation parameters may be adjusted, among which the gains of the speed and position loops, acceleration, jerk and others. The result is a perfectly controllable course in any position, high performance and the absence of mechanical stress during the acceleration and deceleration phases.

As regards system mechanics, in the known devices performance is limited by the mechanical conformation which, to prevent breakages, does not permit overly brusque acceleration ramps. In addition, the continuous rotation of the central transfer unit (on average 3 seconds of rotation and 10 seconds of stopping) certainly causes mechanical wear which over time prejudices system performance and reliability.

With the transfer unit according to the invention, system performance can be raised to maximum in that there is no contact of mechanical parts, no play or inversions which generate mechanical stress of the transfer unit; the only limitation to performance is made by the maximum acceleration and speed which the bearings can withstand, which is not however binding in this application. The absence of mechanical parts in contact or dragged eliminates the problem of wear and consequent reduced performance over time.

A person skilled in the art may make numerous modifications, adaptations and replacements of elements with others functionally equivalent to the embodiments of the transfer unit described above so as to satisfy contingent requirements while remaining within the scope of protection of the invention as defined by the appended claims.

For example, in one embodiment variation, the gripper arms 14 are made, rather than with pneumatic cylinders 18, with electric linear actuators 118, preferably tubular servo linear actuators.

Advantageously, such electric linear actuators 118 receive feed-back on position/or speed and are controlled by respective actuation devices 120, for example, numerically controlled. According to one preferred embodiment, said actuation devices 120 are operatively connected to the control unit 130 of the motor system of the central support 12.

Otherwise, the transfer unit is the same as that described above.

The use of electric linear actuators brings a number of benefits.

Electric linear actuators offer high speed and acceleration, with the possibility of varying, according to programme, the acceleration and speed depending on the type of piece being processed.

The stroke of the gripper arm can be set according to programme. The mechanical configuration of the unit does not vary from one machine to another in that different strokes can be achieved by using a simple software programme.

The stroke of the gripper arm is programmable: once the position of perfect alignment has been determined, all that needs to be done is to memorise the position value or reset the axis in such position. It is therefore extremely simple and fast to commission the machine.

The motor system of the central support and the electric actuators of the arms being managed by their own, independent actuation devices, it is possible to coordinate the rotation movement of the central support 12 with that of translation of the arms 118 in total freedom. For example, a completely parameterizable interpolation curve can be created. Such curve can be defined, for example, by a table of points; advantageously different tables can be created and the one most suitable for the phase of the current cycle be recalled.

For example, during the transfer phase of the pieces a curve is made enabling the minimum movement time; during release from the stations rather, only the arms move, thereby independently of the rotation of the central support, to free the workstations as soon as possible. Optimal curves can be calculated using a mechanical CAD and reproduced on a point table.

Another advantage is the absence of any mechanical impact and the possibility of performing extremely rapid but also extremely gentle acceleration and deceleration movements, thanks to the electronic control of the jerk.

Each of the characteristics described as pertaining to a possible embodiment may be realised independently of the embodiments described.

## Claims

1. Central transfer unit (1) for moving pieces amongst a number of workstations, comprising:
- a motor system (10);
- a central support (12) operatively connected to the motor system so as to be placed in rotation around its axis; and
- a number of gripper arms (14) which extend from said central support, each arm being fitted with a gripper (16) of at least one piece;
where said gripper arms are movable in relation to the support between an inactive rearward position and an advanced pick-up/put down position from or at a workstation,
**characterised by** the fact that said gripper arms are movable between said two advanced and rearward positions independently of the rotation of the central support.

2. Transfer unit (1) according to the previous claim, wherein each gripper arm is moved by a respective pneumatic cylinder (18) mounted on the central support (12).

3. Transfer unit (1) according to the previous claim, wherein each pneumatic cylinder extends transversally from the central support, the respective gripper arm being attached to the stem (19) of said cylinder.

4. Transfer unit (1) according to the previous claim, wherein each pneumatic cylinder (18) has a head fitting inside the central support (12).

5. Transfer unit (1) according to any of the claims 2-5, wherein each gripper arm (14) is, in addition, connected to an anti-rotation arm (20) which extends from the central support (12) parallel to the pneumatic cylinder (18).

6. Transfer unit (1) according to the previous claim, wherein each anti-rotation arm (20) comprises a stem (21) sliding axially in a respective casing (22) attached to the central support.

7. Transfer unit (1) according to the previous claim, wherein the stem of the anti-rotation arm traverses the central support, the casing comprising a front portion (22') facing the respective gripper arm and a rear portion (22") extending from the central support in the opposite direction to house the free end of the stem.

8. Transfer unit according to any of the previous claims, comprising limit switch sensors (24) able to detect the limit positions of the gripper arms (14).

9. Transfer unit according to claims 8 and 9, wherein said limit switch sensors are induction sensors positioned on the rear portion of the casing of the anti-rotation arm.

10. Transfer unit according to any of the previous claims, wherein each gripper arm is, in addition, attached to a device controlling (26) the opening/closing of the gripper.

11. Transfer unit according to claim 11, wherein said control device is a pneumatic cylinder.

12. Transfer unit according to any of the previous claims, wherein on the central support a series of solenoid valves (30) is mounted for the pneumatic powering of the operating cylinders of the gripper arms and of the grippers.

13. Transfer unit according to claim 1, wherein each gripper arm is moved by a respective electric linear actuator managed by its own actuation device with feedback control of the position/speed.

14. Transfer unit according to any of the previous claims, wherein the motor system (10) is a torque motor comprising a stator (40) and a rotor (42) rotating on the stator.

15. Transfer unit according to claim 14, wherein the central support is mounted directly onto the rotor of the torque motor.

16. Transfer unit according to the previous claim, wherein the motor system is controlled by a control unit of the numerical control type.

17. Transfer unit (1) according to the previous claim, comprising a detector sensor (46) of the angular position of the motor system connected to the control unit so as to form a closed loop actuation of the motor system.

18. Transfer unit (1) according to claim 17 or 18, wherein the control unit also controls the movement of the gripper arms.

19. Control method of a transfer machine comprising a plurality of workstations (S1-S4) positioned around a central transfer unit (1) according to any of the previous claims, the method being **characterised by** the fact that the processing of the pieces commences as soon as the gripper arms are recalled to a rearward position.

20. Control method according to claim 19, in which rotation of the central transfer unit takes place also while the pieces are being processed in the workstations.

21. Control method according to claim 20 or 21, wherein the central support can be stopped in a rest position in which the gripper arms are aligned with the workstations.

22. Control method according to claim 22, wherein the operation of the central transfer unit comprises in succession the phases of:
- putting the central unit in the rest position;
- extending the gripper arms;
- picking -up the pieces from the work stations;
- returning the arms to a rearward position and starting rotation of the transfer unit towards the put-down position;
- extending the gripper arms;
- putting down the pieces;
- returning the arms to the rearward position; and
- rotating the transfer unit from the put-down position to the pick-up position.

23. Control method according to any of the claims 20-22, wherein the motor system of the central support is managed by its own numerical control driving device, wherein each arm gripper arm is moved by a respective electric linear actuator also managed by its own numerical control driver, and wherein a parameterizable interpolation curve is created between the rotation movement of the central support and the translation movement of the gripper arms.

24. Transfer machine, comprising a central transfer unit according to any of the claims 1-19, and a plurality of workstations positioned around said central transfer unit, where the workstations are controlled by a numerical control unit which also controls the central transfer unit, said control unit being programmed to implement the control method according to any of the claims 20-24.
